# EUROPEAN PATENT APPLICATION

(11) **EP 1 717 443 A1**
(43) Date of publication of application: **02.11.2006**
(21) Application number: 05710203.0
(22) Date of filing: 15.02.2005
(51) Int. Cl.: F04B 9/00, H02K 1/27, H02K 21/16

(54) **MOTOR-DRIVEN PUMP UNIT**

(30) Priority: 16.02.2004 JP 2004037869
(71) Applicant: JTEKT Corporation, Chuo-ku, Osaka-shi Osaka 542-8502 (JP)
(72) Inventor: SAKATA, Takatoshi, Yamatotakada-shi, Nara 6350093 (JP); ASAI, Yasuo, Kashiwara-shi, Osaka 5820021 (JP); YUKITAKE, Yasuhiro, Nara 6360822 (JP); YOSHINAMI, Kouji, Kashiba-shi, Nara 6390252 (JP)
(74) Representative: Pohlmann, Eckart
(86) International application number: PCT/JP2005/002252
(87) International publication number: WO 2005/078279

(57) **Abstract**

In an electric pump unit in which a single shaft (main shaft 4) functions both as a rotation shaft of a pump section and that of a motor section, a rotor of a motor has a structure in which a magnet 6 is embedded in a rotor core 5 (IPM structure). According to the configuration, in the electric pump unit of the invention, it is not required to dispose a protective ring in the periphery of the rotor core 5. In addition, rotation of the main shaft 4 can be supported by the inner-diameter face of the stator core 7. Accordingly, the electric pump unit of the invention can be configured as an electric pump unit which is lighter, more compact, and more economical as compared with a conventional product.

## Description

### Technical Field

The present invention relates to a compact electric pump unit in which a pump chamber for circulating a fluid and an electric motor chamber are adjacently disposed, such as a vehicle water pump or an oil pump.

### Background Art

Recently, electric vehicles with a lighter load on environments and so-called hybrid vehicles with a smaller amount of exhaust gas attract the attention, and some of them come into a practical use stage. These automobiles have no engines or perform intermittent operations. Therefore, a driving source for an accessory such as a pump which is conventionally driven by an endless belt looped around an engine is required to be replaced with an electric motor.

Conventionally, in this kind of electric pump, a pump and a motor are formed as separate bodies, and the rotation shaft of the pump and that of the motor are coupled together in a drive transmittable manner by means of a joint such as an Oldham's joint. In the case of this configuration, however, a bearing and an oil seal are provided correspondingly for the pair of shafts. Therefore, the number of components is increased, the size of the apparatus is large, and the production cost is increased. Therefore, the applicant of the invention proposed a small and economical electric pump unit in which a single shaft is used both as the rotation shaft of a motor and that of a pump (see Japanese Patent Publication (Kokai) No.2002-31065).

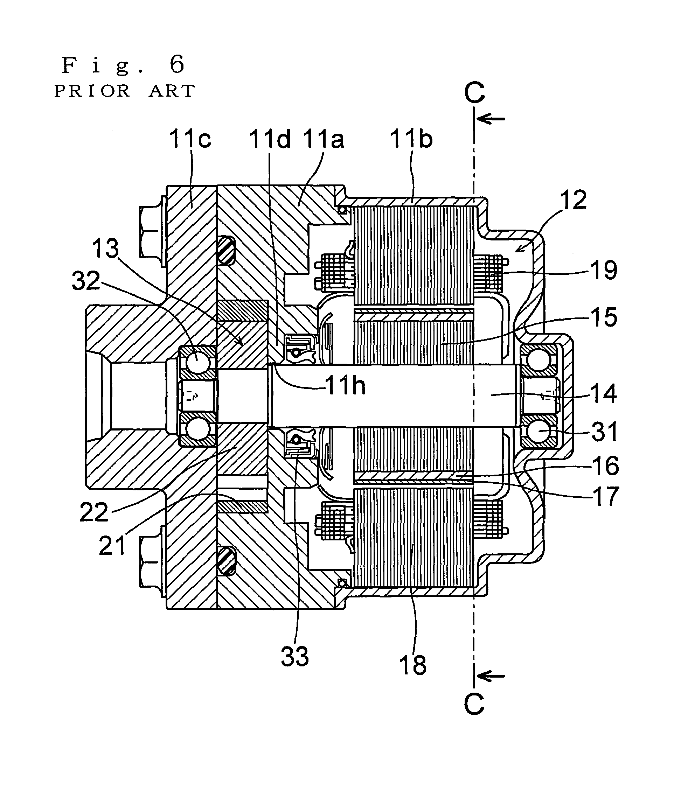

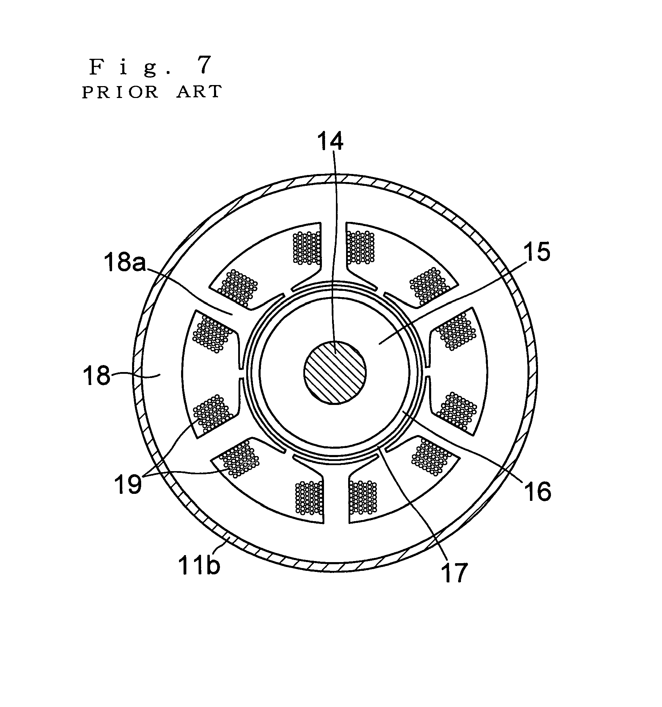

Fig. 6 is a schematic section view showing the structure of a conventional electric pump unit, and Fig. 7 is a section view taken along the line C-C and viewed in a direction indicated by the arrows in Fig. 6.

This example shows a trochoid pump which is to be used as a hydraulic pump for a transmission of an automobile. Inside the housing, an electric motor chamber (motor section 12) and a pump chamber (pump section 13) are formed adjacently. In the housing, a main shaft 14 functioning both as a driving shaft which is rotationally driven by the motor section 12 and a rotation shaft of the pump section 13 is also disposed. Both axial end portions thereof are rotatably supported by bearings 31 and 32 disposed in the housing.

The housing is made by, for example, an aluminum alloy, and configured by coupling together a motor housing 11b which is a cover for the motor section 12, a pump housing 11a which mainly accommodates the pump section 13, and a pump plate 11c for hermetically sealing an opening of the pump housing 11a. The pump housing 11a comprises an inner wall 11d for dividing the pump section 13 and the motor section 12 from each other, and, in a substantially middle in a radial direction thereof, a through hole 11h through which the main shaft 14 is to be inserted is formed. The reference numeral 15 in the figure denotes a rotor core of the motor, 16 denotes a magnet (permanent magnet), 17 denotes a protective ring, 18 denotes a stator core of the motor, 18a denotes a tooth portion of the stator core, 19 denotes a coil, 21 denotes an outer rotor of the trochoid pump, 22 denotes an inner rotor of the trochoid pump, and 33 denotes an oil seal.

As a motor for the above-described electric pump unit, in general, a brushless motor with a surface permanent magnet (hereinafter, abbreviated as SPM) structure is used.

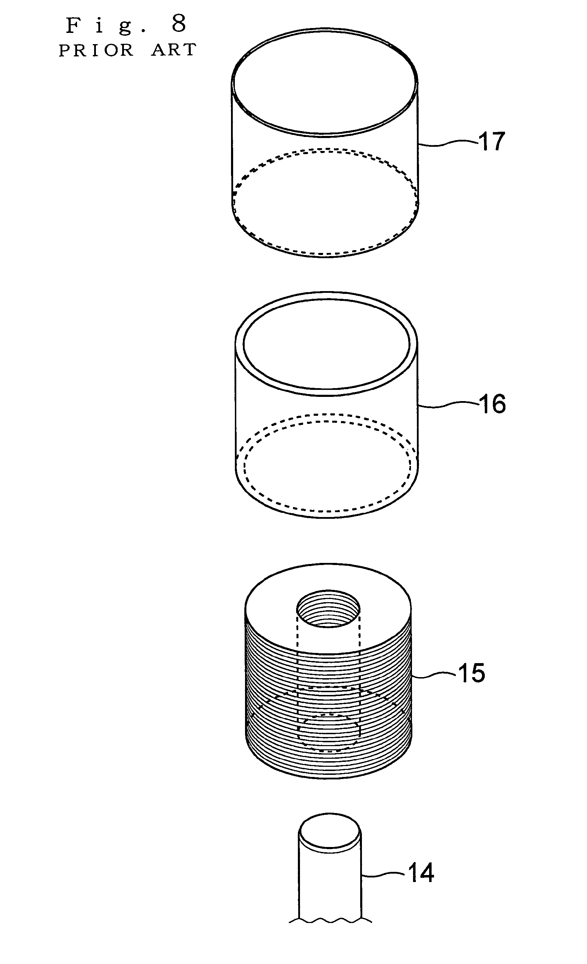

Fig. 8 is an exploded perspective view showing the configuration of a rotor portion of the motor in this example.
As shown in the figure, the rotor portion of the motor with the SPM structure is mainly configured by: the rotor core 15 which is formed by punching electromagnetic steel plates coated with a nonmagnetic material and laminating them; and the cylindrical magnet (ring magnet) 16 disposed on the outer circumference of the rotor core 15. In the periphery of them, the protective ring 17 of a non-magnetic material such as a stainless steel for protecting the magnet 16 exposed from the surface is fitted. As the structure of the rotor portion, a structure (segment system) in which, instead of the cylindrical magnet 16, a plurality of bar-like magnets are disposed in axial grooves disposed in an equally spaced manner in the outer circumferential face of the rotor core 15 may be employed.

Patent Reference 1: Japanese Patent Publication (Kokai) No.2002-31065

### Disclosure of the Invention

### Problems to be Solved by the Invention

Accessories to be mounted on an automobile are requested to be more compact because of the reduction in space of the engine room. In addition, for the accessories, reduction in weight for energy conservation (for improving the fuel efficiency) and reduction in production cost for enhancing the competitive power are always requested. In the above-described electric pump unit, a product with a more reduced weight and a lower production cost is requested while the same functions and reliability as those of the prior art are maintained.

The invention has been conducted in order to solve the above-discussed problems. It is an object of the invention to provide a small and economical electric pump unit with a smaller number of components.

### Means for Solving the Problems

In order to attain the above-mentioned object, the invention of claim 1 is an electric pump unit in which a pump section for sucking and discharging a fluid is formed on one end side of a rotation shaft disposed through a hole provided in an inner wall for dividing a housing, and a motor section is formed on the other end side of the rotation shaft, the motor section comprising: a rotor consisting of a rotor core and a permanent magnet which are fixed to an outer circumference of the rotation shaft; and a stator consisting of a stator core having a teeth portion, and a coil which are disposed in the periphery of the rotor, characterized in that the permanent magnet constituting the rotor is embedded in the rotor core.

The invention attains the desired object by employing the interior permanent magnet (hereinafter abbreviated as IPM) structure in the motor, in the electric pump unit in which a single shaft is used both as the rotation shaft of the pump and that of the motor.

Specifically, according to the invention of claim 1, the motor of the electric pump unit, which conventionally has the SPM structure, is configured so as to have the IPM structure. Therefore, a protective ring for protecting the permanent magnet is not required. Accordingly, the electric pump unit of the invention can realize a fewer number of components and a lighter unit, as compared with a conventional product.

Alternatively, as set forth in claim 2, when a configuration in which a bearing gap is disposed between an outer-diameter face of the rotor core and an inner-diameter face of the stator core opposed thereto, and rotation of the rotation shaft is supported by the stator core is employed, also rolling bearings which are conventionally disposed for supporting the rotation shaft can be omitted. By omitting the bearings, it is a matter of course that the cost of the electric pump unit can be lowered, and furthermore the size in the unit axial direction can be reduced. Accordingly, the electric pump unit can be configured in a further compact manner.

As the stator core used in the electric pump unit of the invention, an annular stator core comprising: an annular core having a cylindrical inner circumferential face; and a tooth portion protruding from an outer circumferential face of the annular core in a radial direction can be preferably employed (claim 3).

Specifically, by using the stator core having a cylindrical inner circumferential face which is continuous in the circumferential direction, an oil film can be easily formed between the inner circumferential face of the stator core and the outer circumferential face of the rotor core which is in sliding contact therewith.

Alternatively, in the electric pump unit of the invention, a solid lubricant coating film made of a non-magnetic material may be formed on at least one of the outer-diameter face of the rotor core and the inner-diameter face of the stator core opposed thereto (claim 4).

By the non-magnetic solid lubricant coating film, the friction between the rotor core and the stator core can be reduced without degrading the efficiency of the motor.

As the permanent magnet used in the motor (the rotor portion) of the electric pump unit of the invention, a rare-earth magnet is preferred, and the rotor core is preferably formed by laminating electromagnetic steel plates (claim 5). According to this configuration, high-speed rotation and high efficiency of the motor can be realized.

### Brief Description of the Drawings

[Fig. 1] Fig. 1 is a schematic section view showing the structure of an electric pump unit of a first embodiment of the invention.
[Fig. 2] Fig. 2 is a section view taken along the line A-A and viewed in a direction indicated by the arrows in Fig. 1.
[Fig. 3] Fig. 3 is an exploded perspective view showing the configuration of a rotor portion of a motor in the electric pump unit of the first embodiment of the invention.
[Fig. 4] Fig. 4 is a schematic section view showing the structure of an electric pump unit of a second embodiment of the invention.
[Fig. 5] Fig. 5 is a section view taken along the line B-B and viewed in a direction indicated by the arrows in Fig. 4.
[Fig. 6] Fig. 6 is a schematic section view showing the structure of a conventional electric pump unit.
[Fig. 7] Fig. 7 is a section view taken along the line C-C and viewed in a direction indicated by the arrows in Fig. 6.
[Fig. 8] Fig. 8 is an exploded perspective view showing the configuration of a rotor portion of a motor in the conventional electric pump unit.

### Description of Reference Numerals

- 1a: housing
- 1b: motor plate
- 1c: pump plate
- 1d: inner wall
- 1h: through hole
- 2: motor section (electric motor chamber)
- 3: pump section (pump chamber)
- 4: main shaft (rotation shaft)
- 5: rotor core
- 5a: hole
- 6: magnet (permanent magnet)
- 7: stator core
- 7a: tooth portion
- 8: annular stator core
- 8a: annular core 8b tooth portion 8c cylindrical member
- 9: coil
- 11a: pump housing
- 11b: motor housing
- 11c: pump plate
- 11d: inner wall
- 11h: through hole
- 12: motor section
- 13: pump section
- 14: main shaft
- 15: rotor core
- 16: magnet
- 17: protective ring
- 18: stator core
- 19: coil
- 21: outer rotor
- 22: inner rotor
- 31, 32: rolling bearing
- 33: oil seal

### Best Mode for Carrying Out the Invention

Hereinafter, embodiments which execute the invention will be described with reference to the drawings.

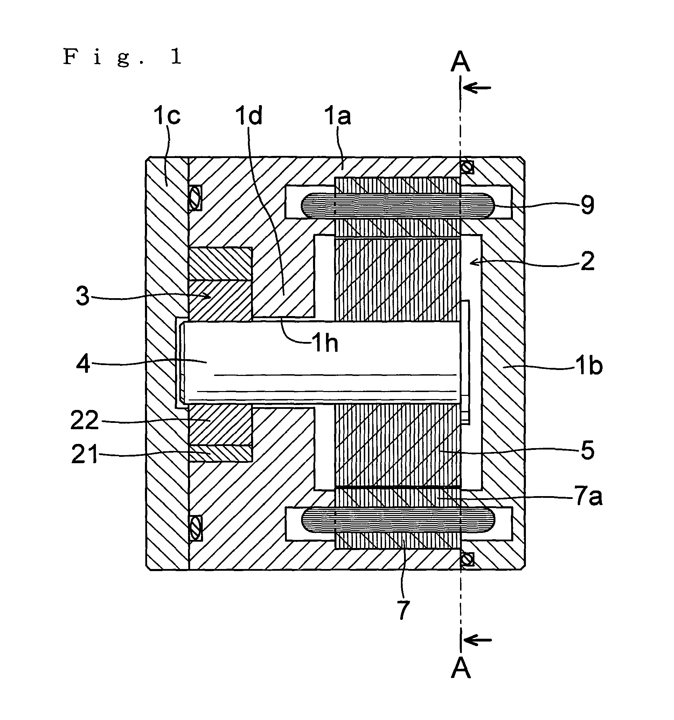

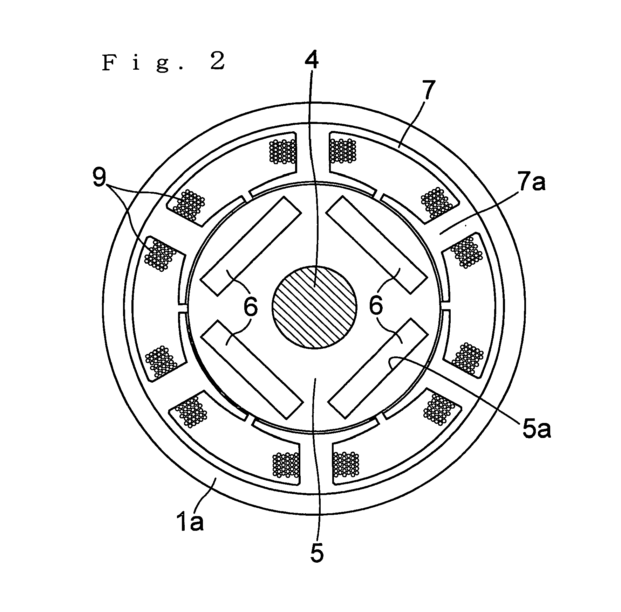

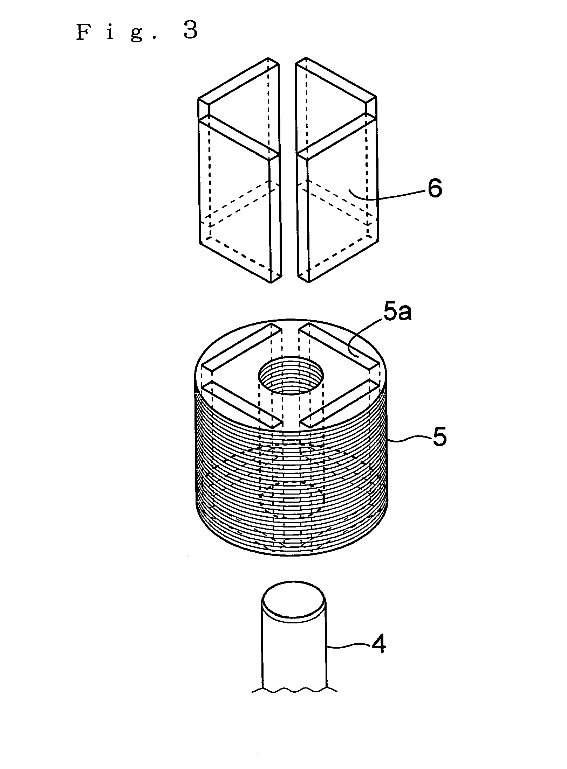

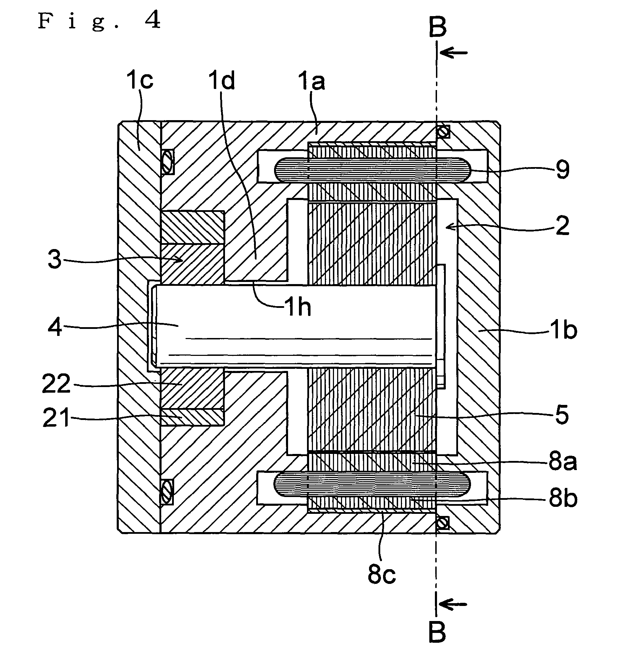

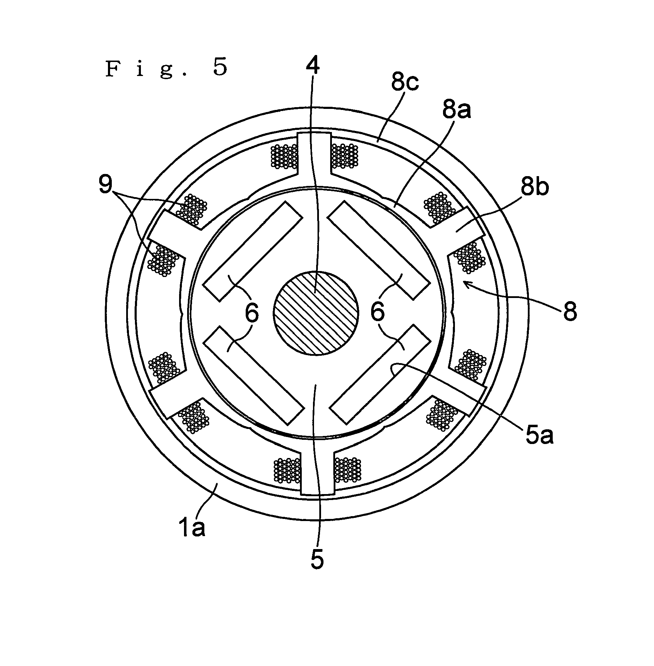

Fig. 1 is a schematic section view showing the structure of an electric pump unit of a first embodiment of the invention, Fig. 2 is a section view taken along the line A-A and viewed in a direction indicated by the arrows in Fig. 1, and Fig. 3 is an exploded perspective view showing the configuration of a rotor portion of a motor in the embodiment.

Also the electric pump unit of the embodiment is a trochoid pump which is to be used as a hydraulic pump for a transmission of an automobile. Inside the housing, an electric motor chamber (motor section 2) and a pump chamber (pump section 3) are adjacently formed. In addition, inside the housing, a main shaft 4 functioning both as a driving shaft which is rotationally driven by the motor section 2, and a rotation shaft of the pump section 3 is disposed.

The housing 1a is made by, for example, an aluminum alloy. In an opening on the side of the motor section 2 and that on the side of the pump section 3, a motor plate 1b and a pump plate 1c for hermetically sealing the openings are disposed, respectively. The housing 1a comprises an inner wall 1d for dividing the housing into the pump section 3 and the motor section 2. In a substantially middle in a radial direction thereof, a through hole 1h through which the main shaft 4 is to be inserted is formed. The reference numeral 5 in the figure denotes a rotor core of the motor, 6 denotes a magnet (permanent magnet), 7 denotes a stator core of the motor, 7a denotes a tooth portion of the stator core, 9 denotes a coil, 21 denotes an outer rotor of the trochoid pump, and 22 denotes an inner rotor of the trochoid pump.

The electric pump unit of the this embodiment is characterized in that, as shown in Fig. 3, the rotor core 5 is formed by laminating electromagnetic steel plates having holes 5a, 5a, ... which are equally spaced in the circumferential direction, and that the magnet 6 is embedded in the rotor core 5. The outer diameter of the rotor core 5 and the inner diameter of the stator core 7 are formed so as to have sizes which form a small gap therebetween, and constituted as a sliding bearing for supporting the rotation of the main shaft 4.

As described above, since the motor section 2 has the IPM structure, it is not necessary to dispose a protective ring in the periphery of the rotor core 5 in the electric pump unit, unlike a conventional motor having the SPM structure. In addition, since the rotation of the main shaft 4 is supported by an inner-diameter face of the stator core 7, it is possible to omit rolling bearings which are conventionally disposed for supporting the rotation shaft. Accordingly, the electric pump unit of the embodiment can be formed as an electric pump unit which is lighter, more compact, and more economical as compared with a conventional product.

The oil (not shown) with which the pump section 3 is filled is flown into the motor section 2 through the through hole 1h of the housing 1a, and functions also as a lubricant for the above-described sliding bearing configured by the rotor core 5 and the stator core 7.

Next, a second embodiment of the invention will be described.
Fig. 4 is a schematic section view showing the structure of an electric pump unit of a second embodiment of the invention, and Fig. 5 is a section view taken along the line B-B and viewed in a direction indicated by the arrows in Fig. 4. The components having the same functions as those in the first embodiment are denoted by identical reference numerals, and their detailed description is omitted.

The electric pump unit of the embodiment is different from that of the first embodiment in that, as shown in Fig. 5, an annular stator core 8 consisting of: an annular core 8a having a cylindrical inner circumferential face; a tooth portion 8b protruding from the outer circumferential face of the annular core 8a in a radial direction; and a cylindrical member 8c which supports the tooth portion 8b is used as a stator core of the motor section 2.

The annular stator core 8 has a cylindrical inner circumferential face which is continuous in the circumferential direction. Therefore, it is easy to form an oil film between the inner circumferential face of the stator core 8 and the outer circumferential face of the rotor core 5 which is in sliding contact therewith. Since the inner circumferential face of the stator core 8 is cylindrical, the inner circumferential face can be finished with high degree of accuracy by means of machining work (for example, grinding).

Accordingly, it is a matter of course that the electric pump unit of the embodiment can be configured as a light and compact electric pump unit similarly to that of the first embodiment. Furthermore, the friction in the sliding bearing portion is reduced, and hence the electric pump unit can be configured as an electric pump unit which has a long lifetime, and which can cope with high-speed rotation.

In the electric pump unit of the invention, on at least one of the outer-diameter face of the rotor core 5 and the inner-diameter face of the stator core (7, 8) opposed thereto, a solid lubricant coating film of a non-magnetic material (for example, a fluorocarbon resin such as PTFE) may be formed. By the provision of the non-magnetic solid lubricant coating film, the friction between the rotor core and the stator core can be further reduced.

In the electric pump unit of the invention, in the periphery of the through hole of the housing, an oil seal, a mechanical seal, or the like for shaft-sealing a fluid which circulates in the pump section may be disposed.

Moreover, as the magnet 6 used in the motor section 2 (rotor), a rare-earth (particularly, neodymium) magnet is preferably used. As the rotor core 5 and the stator core (7, 8), a core which is formed by laminating electromagnetic steel plates can be preferably employed. When these configurations are employed, high-speed rotation and higher efficiency of the motor can be realized.

The structures of the motor and the pump in the invention are not restricted to those in the above-described embodiments. For example, the invention can be applied to electric pump units with other configurations such as a pump using an impeller, and a vane pump.

### Industrial Applicability

As described above, according to the electric pump unit of the invention, a protective ring for protecting the permanent magnet in the rotor portion of the motor is not required, and therefore the reduction in number of components and the reduction in weight can be attained as compared with a conventional product.

In addition, when the configuration in which the rotation of the rotation shaft is supported by the stator core is employed, rolling bearings which are conventionally disposed for supporting the rotation shaft can be omitted, so that the electric pump unit can be configured in a further compact manner.

## Claims

1. An electric pump unit in which a pump section for sucking and discharging a fluid is formed on one end side of a rotation shaft disposed through a hole provided in an inner wall for dividing a housing, and a motor section is formed on another end side of said rotation shaft, said motor section comprising: a rotor consisting of a rotor core and a permanent magnet which are fixed to an outer circumference of said rotation shaft; and a stator consisting of a stator core having a teeth portion, and a coil which are disposed in a periphery of said rotor, wherein
said permanent magnet constituting said rotor is embedded in said rotor core.

2. An electric pump unit according to claim 1, wherein a bearing gap is disposed between an outer-diameter face of said rotor core and an inner-diameter face of said stator core opposed thereto, and rotation of said rotation shaft is supported by said stator core.

3. An electric pump unit according to claim 2, wherein said stator core is an annular stator core comprising: an annular core having a cylindrical inner circumferential face; and a tooth portion protruding from an outer circumferential face of said annular core in a radial direction.

4. An electric pump unit according to claim 2 or 3, wherein a solid lubricant coating film made of a non-magnetic material is formed on at least one of said outer-diameter face of said rotor core and said inner-diameter face of said stator core opposed thereto.

5. An electric pump unit according to any one of claims 1 to 4, wherein said permanent magnet is a rare-earth magnet, and said rotor core is formed by using laminated electromagnetic steel plates.
